# EUROPÄISCHE PATENTANMELDUNG

(11) **EP 1 522 758 A1**
(43) Veröffentlichungstag der Anmeldung: **13.04.2005**
(21) Anmeldenummer: 04104701.0
(22) Anmeldetag: 27.09.2004
(51) Int. Cl.: F16F 9/46

(54) **Regelbarer hydraulischer Schwingungsdämpfer**

(30) Priorität: 06.10.2003 DE 10346248
(71) Anmelder: Bayerische Motoren Werke Aktiengesellschaft, 80809 München (DE)
(72) Erfinder: van der Knaap, Albert, 5706, Kx Helmond (NL); Schouten, Niels Johannes, 5611, KG Eindhoven (NL)

(57) **Zusammenfassung**

Die Erfindung betrifft einen regelbaren hydraulischen Schwingungsdämpfer für ein Kraftfahrzeug. Dieser besitzt mindestens eine Verstelleinrichtung für einen Öffnungsquerschnitt eines Überströmkanals (10,11) für ein hydraulisches Druckmedium zwischen durch mindestens einen Kolben getrennten Arbeitskammern. Dabei besteht die Verstelleinrichtung aus einem im Öffnungsquerschnitt des Überströmkanals (10,11) verschiebbaren, mit mindestens einer Durchströmöffnung (1,2,3) versehenen Schieber (5). Die Erfindung zeichnet sich dadurch aus, dass die Durchströmöffnung im Schieber so angebracht ist, dass dieser vom Druckmedium höchstens in seinen Verschieberichtungen (6) mit Kraft beaufschlagt wird und sich in allen anderen Richtungen hinsichtlich der vom Druckmedium auf den Schieber einwirkenden Kräfte im wesentlichen in einem Kräftegleichgewicht befindet.

## Beschreibung

Die Erfindung betrifft einen regelbaren hydraulischen Schwingungsdämpfer für ein Kraftfahrzeug, nach dem Oberbegriff des Hauptanspruchs.

In der DE 101 04 640 C1 wird ein regelbarer hydraulischer Schwingungsdämpfer für Kraftfahrzeuge beschrieben, bei dem ein Dämpfungsventil im Dämpfungskolben eines Schwingungsdämpferzylinders beaufschlagendes Druckmedium im Schwingungsdämpferzylinder zwischen zwei durch den Dämpfungskolben getrennten Arbeitsräumen überströmen kann. Das Überströmen wird durch Verdrängung von Druckmedium aufgrund von Relativbewegungen des Schwingungsdämpferzylinders zum Dämpfungskolben verursacht. Außerdem besitzt der Schwingungsdämpfer zusätzlich ein Kanalsystem, durch das, mittels eines verschieblich geführten, elektromagnetisch betätigten Flachschiebers, ein geregelter Übertritt von Druckmedium zwischen den Arbeitsräumen stattfinden kann.

Der Offenbarungsgehalt von DE 101 04 640 C1 wird ausdrücklich in diese Beschreibung miteinbezogen, um eine vollständige Offenbarung der gesamten Schwingungsdämpferfunktionen zu gewährleisten.

Speziell wird in DE 101 04 640 C1 beschrieben, dass der Flachschieber als Stellelement so ausgebildet ist, dass für diesen nur geringe Haltekräfte aufgebracht werden müssen. Der Flachschieber ist deshalb so gebaut und vom Druckmedium beaufschlagt, dass bei hohen Druckdifferenzen eine große Selbsthaltungskraft erzielt wird, die dann großen induzierten Verstellkräften entgegenwirkt. Eine hohe Druckdifferenz im Dämpfungsmedium zwischen den Arbeitsräumen des Schwingungsdämpfers führt beabsichtigt zu einem Anliegen des Flachschiebers an die zugehörigen Anlageflächen seines Führungsschlitzes. Das bedingt eine Selbstsperrung der Lage des Flachschiebers, so dass so gut wie keine Haltekräfte vom Elektromagneten aufgebracht werden müssen.

Erfolgt nun im Bereich des Umkehrpunkts der Bewegung der Kolbenstange des hydraulischen Schwingungsdämpfers ein Druckausgleich zwischen den Arbeitsräumen, wird diese Selbsthemmung aufgehoben. Der Flachschieber ist in seinem Führungsschlitz ohne große Krafteinleitung leichtgängig verstellbar.

Nachteilig ist bei dieser Ausführung, dass der Flachschieber nur im Umkehrpunkt der Bewegung der Kolbenstange verstellt werden kann. Für eine feinfühligere Regelung ist es aber notwendig, dass eine Verstellung des Stellelements jederzeit möglich ist.

Deshalb ist es Aufgabe der Erfindung, einen regelbaren hydraulischen Schwingungsdämpfer bereitzustellen, dessen Stellelement nicht nur bei Druckausgleich zwischen den Arbeitsräumen bewegt werden kann, sondern während des gesamten Arbeitshubs des Schwingungsdämpfers, sowohl in der Druckstufe, als auch in der Zugstufe.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung besitzt ein Hydraulischer Schwingungsdämpfer für ein Kraftfahrzeug, mindestens eine Verstelleinrichtung für einen Öffnungsquerschnitt eines Überströmkanals für ein hydraulisches Druckmedium zwischen durch mindestens einen Kolben getrennten Arbeitskammern. Dabei besteht die Verstelleinrichtung aus einem im Öffnungsquerschnitt des Überströmkanals verschiebbaren, mit mindestens einer Durchströmöffnung versehenen Schieber und ist dadurch gekennzeichnet, dass die Druchströmöffnung im Schieber so angebracht ist, dass dieser vom Druckmedium höchstens in seinen Verschieberichtungen mit Kraft beaufschlagt wird und sich in allen anderen Richtungen hinsichtlich der vom Druckmedium auf den Schieber einwirkenden Kräfte im wesentlichen in einem Kräftegleichgewicht befindet.

Das hat den Vorteil, dass die auf den Schieber wirkenden Reibungskräfte, die durch dessen Beaufschlagung mit dem Hydraulikmedium hervorgerufen werden, gering gehalten werden können. Daher ist eine Bewegung des Schiebers als Stellelement, während des gesamten Arbeitshubs des Schwingungsdämpfers, sowohl in der Druckstufe, als auch in der Zugstufe möglich.

Eine vorteilhafte Ausführung der Erfindung ist dadurch gekennzeichnet, dass der Schieber im Überströmkanal von Teilströmen des Druckmediums so beaufschlagt wird, dass sich deren Kraftwirkung auf den Schieber im wesentlichen neutralisiert.

Dadurch ist sowohl bei völlig geschlossenem Schieber, also wenn kein Druckmedium durch den Überströmkanal fließt, als auch bei hohen Strömungsgeschwindigkeiten im Überströmkanal, auf einfache Weise gewährleistet, dass der Schieber jederzeit verstellbar ist, da die auf ihn einwirkenden hydraulischen Kräfte symmetrisch so gegeneinander gerichtet sind, dass sie sich gegenseitig aufheben.

Wenn der Schieber ein Hohlkörper mit Durchströmöffnungen ist, der vom Druckmedium durchflossen wird, ist seine Gestaltung, die die auf ihn einwirkenden hydraulischen Kräfte symmetrisch so gegeneinander richtet, dass diese sich gegenseitig aufheben, besonders einfach möglich.

Zum Beispiel können eine erste und eine zweite Durchströmöffnung des Schiebers jeweils im wesentlichen gleich dimensioniert, rechtwinklig zu den Verschieberichtungen des Schiebers und bezogen auf den Schwerpunkt des Schiebers in gleichem Abstand und auf gleicher Höhe zu diesem stehend, gleichmäßig am Umfang des Schiebers verteilt, jeweils anschließend an einen Überströmkanal für einen Teilstrom des Druckmediums in den Schieber eingebracht sein.

Durch eine solche Aufteilung des Überströmkanals in Teilströme, lässt sich die Kraftwirkung auf den Schieber vorteilhafterweise einfach neutralisieren.

Wenn dann weitere Durchströmöffnungen auf senkrecht zu den Verschieberichtungen des Schiebers gerichteten Schieberseiten, insbesondere eine einzige dritte Durchströmöffnung auf einer senkrecht zu den Verschieberichtungen des Schiebers gerichteten Schieberseite, im wesentlichen symmetrisch bezogen auf den Schwerpunkt des Schiebers auf der jeweiligen Schieberseite verteilt, insbesondere mittig auf einer Schieberseite, gleich dimensioniert, anschließend an zugehörige Überströmkanäle des Druckmediums, insbesondere an einen einzigen, in den Schieber eingebracht sind, ist der konstruktive Aufbau des Schiebers bezüglich seines Einbaus in den Überströmkanal eines Schwingungsdämpfers besonders günstig.

Bei einer bevorzugten Ausführung der Erfindung besitzen die Durchströmöffnungen, die rechtwinklig zu den Verschieberichtungen des Schiebers in diesen eingebracht sind und den Öffnungsquerschnitt des Überströmkanals verstellen, einen Öffnungsquerschnitt, der bezogen auf den Verschiebeweg des Schiebers und den Öffnungsquerschnitt des Überströmkanals insbesondere das Überströmen einer Grunddurchflussmenge des Druckmediums bei geschlossenem Schieber ermöglicht. Weiterhin lässt der Öffnungsquerschnitt des Überströmkanals beim Öffnen des Schiebers zuerst eine linear, dann eine langsam progressiv, dann schnell progressiv zunehmende Durchflussmenge des Druckmediums überströmen. Alternativ kann der Öffnungsquerschnitt auch so gestaltet sein, dass er beim Öffnen des Schiebers zuerst eine langsam progressiv, dann schnell progressiv zunehmende Durchflussmenge des Druckmediums überströmen lässt.

Durch solche Gestaltungen des Öffnungsquerschnitts des Überströmkanals bzw. der Überströmkanäle im Schieber kann die Regelcharakteristik des Schwingungsdämpfers vorteilhafterweise optimiert werden.

Eine kostengünstige und einfache Gestaltung des Schiebers ist möglich, wenn dieser ein Zylinder, insbesondere ein Kreiszylinder, ist, dessen rechtwinklig zu den Verschieberichtungen des Schiebers platzierte Durchströmöffnungen in den Zylindermantel eingebracht sind und dessen weitere Durchströmöffnungen, eingebracht in senkrecht zu den Verschieberichtungen des Schiebers gerichteten Schieberseiten, sich im Zylinderboden befinden.

Alternativ dazu kann der Schieber zum Beispiel auch als ein Quader ausgebildet sein, dessen rechtwinklig zu den Verschieberichtungen des Schiebers platzierte Durchströmöffnungen in den Quadermantel eingebracht sind und dessen weitere Durchströmöffnungen, eingebracht in senkrecht zu den Verschieberichtungen des Schiebers gerichteten Schieberseiten, sich im Quaderboden befinden.

Hierdurch wird vorteilhafter Weise ebenfalls erreicht, dass ein während des Betriebs von äußeren Kräften befreiter Schieber einfach ausgebildet und gestaltet werden kann.

Ein bevorzugtes Ausführungsbeispiel der Erfindung ist in der nachfolgenden Beschreibung und der zugehörigen Zeichnung näher dargestellt. Es zeigen:
- Figur 1:: eine schematische Prinzipskizze eines erfindungsgemäßen Schiebers im Überströmkanal,
- Figur 2:: einen vergrößerten und um 90° gedrehten Ausschnitt aus Figur 1, der den Querschnitt eines Überströmkanals für einen Teilstrom und den Querschnitt einer Durchströmöffnung des Schiebers zeigt,
- Figur 3:: eine Kennlinie für den erfindungsgemäßen Schieber entsprechend den Figuren 1 und 2, in der der Öffnungsquerschnitt der Durchströmöffnung aufgetragen ist über der Schieberposition und
- Figur 4:: eine Kennlinie in der der Verschiebeweg des Schiebers aufgetragen ist über der Schieberposition.

Auch die Beschreibung des Ausführungsbeispiels soll die Offenbarung von DE 101 04 640 C1 mit einschließen. Dort ist die Funktion eines hydraulischen Schwingungsdämpfers beschrieben, dessen Dämpfungskraft durch einen Flachschieber geregelt werden kann. Dieser Flachschieber wird ersetzt durch einen Schieber, der hier als Ausführungsbeispiel beschrieben ist. Die weiteren in DE 101 04 640 C1 beschriebenen, bekannten Bauteile eines hydraulischen Schwingungsdämpfers kommen in dieser Erfindung ebenfalls zur Anwendung und gehören zum Offenbarungsumfang.

In einem hydraulischen Schwingungsdämpfer für ein Kraftfahrzeug ist eine Verstelleinrichtung für Öffnungsquerschnitte von Überströmkanälen 10, 11 von Teilströmen (Stromlinien 7, 8) eines hydraulischen Druckmediums zwischen durch mindestens einen nicht gezeichneten Kolben getrennten Arbeitskammern eingebaut. Die Verstelleinrichtung besteht aus einem im Öffnungsquerschnitt der Überströmkanäle 10, 11 verschiebbaren, mit drei Durchströmöffnungen 1, 2, 3 versehenen hohlen Schieber 5. Um die vom Druckmedium auf den Schieber 5 einwirkenden Kräfte im wesentlichen in einem Kräftegleichgewicht zu halten, sind die Durchströmöffnungen 1, 2, 3 im Schieber 5 so angebracht, dass dieser vom Druckmedium höchstens in seinen Verschieberichtungen (Pfeil 6) mit Kraft beaufschlagt wird und sich die auf den Schieber 5 einwirkenden Kräfte in allen anderen Richtungen ausgleichen.

Der vom Druckmedium durchflossene Schieber 5 ist dazu so symmetrisch gestaltet, dass er von zwei Teilströmen (Stromlinien 7, 8) des Druckmediums, deren Kraftwirkung auf den Schieber 5 sich im wesentlichen neutralisiert, beaufschlagt wird. Die erste und die zweite Durchströmöffnung 1, 2 des Schiebers 5 sind gleich dimensioniert und stehen rechtwinklig zu den Verschieberichtungen (Pfeil 6) des Schiebers 5. Bezogen auf den Schwerpunkt des Schiebers 5 sind sie in gleichem Abstand und auf gleicher Höhe zu diesem stehend, gleichmäßig am Umfang des Schiebers 5 verteilt. Außerdem im Schwingungsdämpfer jeweils anschließend an einen der Überströmkanäle 10, 11 für einen Teilstrom (Stromlinien 7, 8) des Druckmediums in den Schieber 5 eingebracht.

Eine einzige dritte Durchströmöffnung 3, die, symmetrisch bezogen auf den Schwerpunkt des Schiebers 5 und mittig, auch anschließend an einen zugehörigen, nicht gezeichneten Überströmkanal des Druckmediums in den Schieber 5 eingebracht ist, ist in einer senkrecht zu den Verschieberichtungen (Pfeil 6) des Schiebers 5 gerichteten Schieberseite 9 platziert.

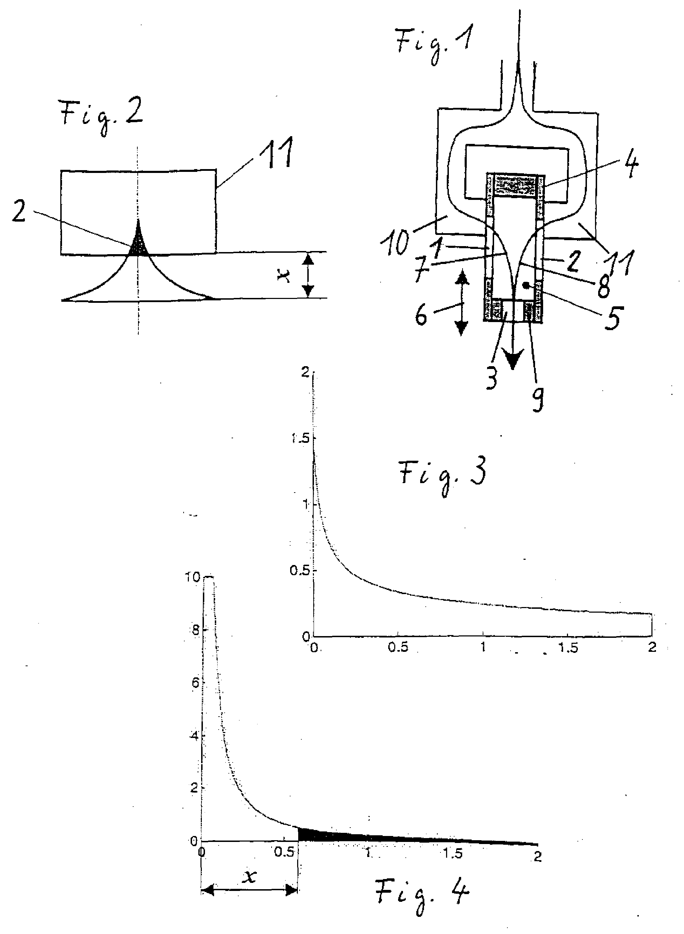

In Figur 2 ist ein Öffnungsquerschnitt einer Durchströmöffnung 2, die rechtwinklig zu den Verschieberichtungen (Pfeil 6) des Schiebers 5 in diesen eingebracht ist und den Öffnungsquerschnitt eines der Überströmkanäle 10 verstellt, gezeigt. Dieser im wesentlichen zirkuszeltdachförmige Öffnungsquerschnitt bewirkt, bezogen auf den Verschiebeweg des Schiebers 5 und den Öffnungsquerschnitt des Überströmkanals 10, dass beim Öffnen des Schiebers 5 zuerst eine langsam progressiv, dann eine schnell progressiv zunehmende Durchflussmenge des Druckmediums überströmt. Dabei kann insbesondere noch eine nicht gezeichnete Ausnehmung an der Spitze des zirkuszeltdachförmigen Öffnungsquerschnitts vorgesehen sein, die das Überströmen einer Grunddurchflussmenge des Druckmediums bei geschlossenem Schieber 5 und anfänglich einen linearen Anstieg der Durchflussmenge ermöglicht. Alternativ dazu kann auch vorgesehen sein, dass der Schieber 5 in geschlossener Position den Überströmkanal 10 nicht ganz verschließt.

Aus den Figuren 3 und 4 ist dies ebenfalls zu entnehmen. Die Kennlinien für den Schieber 5 zeigen in Figur 3 den Öffnungsquerschnitt der Durchströmöffnung, aufgetragen über der Schieberposition und in Figur 4 den Verschiebeweg des Schiebers 5, aufgetragen über der Schieberposition. Dabei ist mit x in Figur 4 und Figur 2 dieselbe Schieberposition gekennzeichnet, kurz vor dem stark progressiven Ansteigen des Öffnungsquerschnittes des Überströmkanals 10.

Der in der Figur 1 gezeichnete Schieber 5 ist als Quader ausgebildet, dessen rechtwinklig zu den Verschieberichtungen (Pfeil 6) des Schiebers 5 platzierte Durchströmöffnungen 1, 2 in den Quadermantel 4 eingebracht sind und dessen dritte Durchströmöffnung 3, eingebracht in die senkrecht zu den Verschieberichtungen (Pfeil 6) des Schiebers 5 gerichteten Schieberseite 9, sich im Quaderboden befindet.

Es ist allerdings genauso möglich, dass der Schieber 5 alternativ als Zylinder, insbesondere als Kreiszylinder, entsprechend ausgebildet ist.

## Patentansprüche

1. Hydraulischer Schwingungsdämpfer für ein Kraftfahrzeug, mit mindestens einer Verstelleinrichtung für einen Öffnungsquerschnitt eines Überströmkanals (10, 11) für ein hydraulisches Druckmedium zwischen durch mindestens einen Kolben getrennten Arbeitskammern, wobei die Verstelleinrichtung aus einem im Öffnungsquerschnitt des Überströmkanals (10, 11) verschiebbaren, mit mindestens einer Durchströmöffnung (1, 2, 3) versehenen Schieber (5) besteht, **dadurch gekennzeichnet, dass** die Durchströmöffnung (1, 2, 3) im Schieber (5) so angebracht ist, dass dieser vom Druckmedium höchstens in seinen Verschieberichtungen (Pfeil 6) mit Kraft beaufschlagt wird und sich in allen anderen Richtungen hinsichtlich der vom Druckmedium auf den Schieber (5) einwirkenden Kräfte im wesentlichen in einem Kräftegleichgewicht befindet.

2. Hydraulischer Schwingungsdämpfer nach Anspruch 1, **dadurch gekennzeichnet, dass** der Schieber (5) im Überströmkanal (10, 11) von Teilströmen (7, 8) des Druckmediums so beaufschlagt wird, dass sich deren Kraftwirkung auf den Schieber (5) im wesentlichen neutralisiert.

3. Hydraulischer Schwingungsdämpfer nach Anspruch 1 oder 2, **dadurch gekennzeichnet, dass** der Schieber (5) ein Hohlkörper mit Durchströmöffnungen (1, 2, 3) ist, der vom Druckmedium durchflossen wird.

4. Hydraulischer Schwingungsdämpfer nach Anspruch 3, **dadurch gekennzeichnet, dass** mindestens eine erste und eine zweite Durchströmöffnung (1, 2) des Schiebers (5) jeweils im wesentlichen gleich dimensioniert, rechtwinklig zu den Verschieberichtungen (Pfeil 6) des Schiebers (5) und bezogen auf den Schwerpunkt des Schiebers (5) in gleichem Abstand und auf gleicher Höhe zu diesem stehend, gleichmäßig am Umfang des Schiebers (5) verteilt, jeweils anschließend an einen Überströmkanal (10, 11) für einen Teilstrom (7, 8) des Druckmediums in den Schieber (5) eingebracht sind.

5. Hydraulischer Schwingungsdämpfer nach Anspruch 4, **dadurch gekennzeichnet, dass** weitere Durchströmöffnungen (3) auf senkrecht zu den Verschieberichtungen (Pfeil 6) des Schiebers (5) gerichteten Schieberseiten, insbesondere eine einzige dritte Durchströmöffnung (3) auf einer senkrecht zu den Verschieberichtungen (Pfeil 6) des Schiebers (5) gerichteten Schieberseite, im wesentlichen symmetrisch bezogen auf den Schwerpunkt des Schiebers (5) auf der jeweiligen Schieberseite verteilt, insbesondere mittig auf einer Schieberseite, gleich dimensioniert, anschließend an zugehörige Überströmkanäle des Druckmediums, insbesondere an einen einzigen, in den Schieber (5) eingebracht sind.

6. Hydraulischer Schwingungsdämpfer nach einem der Ansprüche 1 bis 5, **dadurch gekennzeichnet, dass** die Durchströmöffnungen (1, 2), die rechtwinklig zu den Verschieberichtungen (Pfeil 6) des Schiebers (5) in diesen eingebracht sind und den Öffnungsquerschnitt des Überströmkanals (1, 2) verstellen, einen Öffnungsquerschnitt besitzen, der bezogen auf den Verschiebeweg des Schiebers (5) und den Öffnungsquerschnitt des Überströmkanals (1, 2) insbesondere das Überströmen einer Grunddurchflussmenge des Druckmediums bei geschlossenem Schieber (5) ermöglicht, weiterhin beim Öffnen des Schiebers (5) zuerst eine langsam progressiv, dann schnell progressiv zunehmende Durchflussmenge des Druckmediums überströmen lässt.

7. Hydraulischer Schwingungsdämpfer nach einem der Ansprüche 1 bis 5, **dadurch gekennzeichnet, dass** die Durchströmöffnungen (1, 2), die rechtwinklig zu den Verschieberichtungen (Pfeil 6) des Schiebers (5) in diesen eingebracht sind und den Öffnungsquerschnitt des Überströmkanals (1, 2) verstellen, einen Öffnungsquerschnitt besitzen, der bezogen auf den Verschiebeweg des Schiebers (5) und den Öffnungsquerschnitt des Überströmkanals (1, 2) insbesondere das Überströmen einer Grunddurchflussmenge des Druckmediums bei geschlossenem Schieber (5) ermöglicht, weiterhin beim Öffnen des Schiebers (5) zuerst eine linear, dann langsam progressiv, dann schnell progressiv zunehmende Durchflussmenge des Druckmediums überströmen lässt.

8. Hydraulischer Schwingungsdämpfer nach einem der Ansprüche 1 bis 6, **dadurch gekennzeichnet, dass** der Schieber (5) ein Zylinder, insbesondere ein Kreiszylinder, ist, dessen rechtwinklig zu den Verschieberichtungen (Pfeil 6) des Schiebers (5) platzierte Durchströmöffnungen (1, 2) in den Zylindermantel eingebracht sind und dessen weitere Durchströmöffnungen (3), eingebracht in senkrecht zu den Verschieberichtungen (Pfeil 6) des Schiebers (5) gerichteten Schieberseiten, sich im Zylinderboden befinden.

9. Hydraulischer Schwingungsdämpfer nach einem der Ansprüche 1 bis 6, **dadurch gekennzeichnet, dass** der Schieber (5) ein Quader ist, dessen rechtwinklig zu den Verschieberichtungen (Pfeil 6) des Schiebers (5) platzierte Durchströmöffnungen (1, 2) in den Quadermantel eingebracht sind und dessen weitere Durchströmöffnungen (3), eingebracht in senkrecht zu den Verschieberichtungen (Pfeil 6) des Schiebers (5) gerichteten Schieberseiten, sich im Quaderboden befinden.
